# EUROPEAN PATENT APPLICATION

(11) **EP 1 647 374 A2**
(43) Date of publication of application: **19.04.2006**
(21) Application number: 05255789.9
(22) Date of filing: 20.09.2005
(51) Int. Cl.: B26D 1/553, B26D 1/48, B26D 7/22

(54) **Bread slicer**

(30) Priority: 12.10.2004 AU 2004905896
(71) Applicant: Moffat Pty Limited, Mulgrave, Victoria 3170 (AU)
(72) Inventor: Willet, Paul Eaton, 4503 Queensland (GB)
(74) Representative: Khan, Mohammed Saiful Azam

(57) **Abstract**

An apparatus for slicing loaves of bread comprising:
a housing;
a reciprocating cutting blade assembly 7 mounted within the housing, an angled table for the movement of loaves towards the reciprocating cutting blade assembly 7; and
a means for feeding loaves 6 along the angled table to the cutting blade assembly 7, the housing having an opening for the introduction of loaves on the angled table and a gate 8 for restricting access to the cutting blade assembly 7 through the opening.

## Description

### Field of the invention

This invention relates to bread slicers and more particularly to bread slicers in which the bread is sliced with a reciprocating blade.

### Background of the invention

In many commercial operations, loaves of bread are sliced prior to wrapping by means of an apparatus in the form of a reciprocating slicer. Such reciprocating slicers include a number of parallel spaced blades mounted in reciprocating frames. The loaves of bread are normally fed with their longer axis perpendicular to the cutting blades and in contact with one another as they pass through the reciprocating frame.

In some versions of reciprocating bread slicers, the reciprocating frames are exposed, exposing the operators of the bread slicers to the risk of contact with moving or stationary blades. In other versions of reciprocating bread slicers where the reciprocating frame is housed within an enclosure, there is still a risk that the operator's hands can come into contact with the stationary reciprocating blades during loading of the loaves of bread onto a supporting table.

### Summary of the invention

In order to overcome this problem the invention in one embodiment provides an apparatus for slicing loaves of bread comprising a housing, a reciprocating cutting blade assembly mounted within the housing, an angled table for the movement of loaves towards the reciprocating cutting blade assembly and a means for feeding loaves along the angled table to the cutting blade assembly, the housing having an opening for the introduction of loaves on the angled table and a gate for restricting access to the cutting blade assembly through the opening.

In a preferred form of the invention the operation of the gate is controlled by the position of the loaf feeder. The gate has a locked mode and an unlocked mode with the locking and unlocking of the gate being controlled by a locking mechanism interacting with the loaf feeder. The loaf feeder operates between a position where the last loaf in a procession of loaves is pushed into the reciprocating cutting assembly and a retracted position. In the retracted position, the loaf feeder is withdrawn to enable fresh loaves to be loaded onto the angled table. When the loaf feeder is in this position, the gate is locked into a closed position preventing access to the cutting assembly through the opening. This effectively prevents the operator's hands coming into contact with the moving or stationary blades during the loading operation.

Once the loaf feeder is released, the action of the loaf feeder pushes the loaves in procession through the gate onto the cutting blades. The opening in the housing through which the loaves pass is sized to allow the passage of the loaves there through. During feeding of the loaves along the angled table, the presence of the loaf in the opening effectively prevents access to the blades through the opening by the operator. When the loaves have all been sliced the loaf feeder is retracted, locking the gate in the closed position and the reloading cycle is commenced.

It is preferable that the action of the loaf feeder is powered to give a constant pushing force rather than a constant loaf feeding rate. The preferred form of the loaf feeder is a lever arm pivotally mounted to the apparatus. The lever arm is spring mounted so that the pushing force provided by the loaf feeder is sufficient to urge the loaves onto the cutting assembly but not too strong as to crush the loaves during the cutting operation. To enable the lever arm to contact a consistent position on the loaf through its travel along the table to the cutting assembly, the table may be arcuate shaped with the radius of the arc being the pivot point of the lever arm. Thus, the table upon which the loaves travel is angled down towards the cutting assembly.

The curved surface of the rear table provides a sufficiently flat, initially horizontal surface on which to load the bread. The reciprocating cutting blades are typically aligned at an acute angle (an angle less than 90°) to the angled table allowing the loaves to be sliced diagonally in cross section as they pass through the reciprocating blades. This orientation also allows one corner of the loaf to first contact the cutting blades. Cutting square or rectangular loaves at a first corner permits the crust to be pierced and once pierced, causes faster or more consistent movement of the blades through the bread. This provides for much more efficient cutting of the bread.

### Brief description of the drawings

Figure 1 is a sectional view of an embodiment of the invention;
Figure 2 is a sectional view of the embodiment of Figure 1, showing detail of the inter-working between the safety gate and the pusher in the retracted mode.
Figure 3 is a further section view of the embodiment in Figure 2, showing the pusher in the feed mode.
Figure 4 is a partial sectional view of the embodiment of Figure 1 with the door open; and
Figure 5 is an enlarged view of section A in Figure 4.

### Detailed description of the embodiments

It will be understood that the invention disclosed and defined in this specification extends to all alternative combinations of two or more of the individual features mentioned or evident from the text or drawings. All of these different combinations constitute various alternative aspects of the invention.

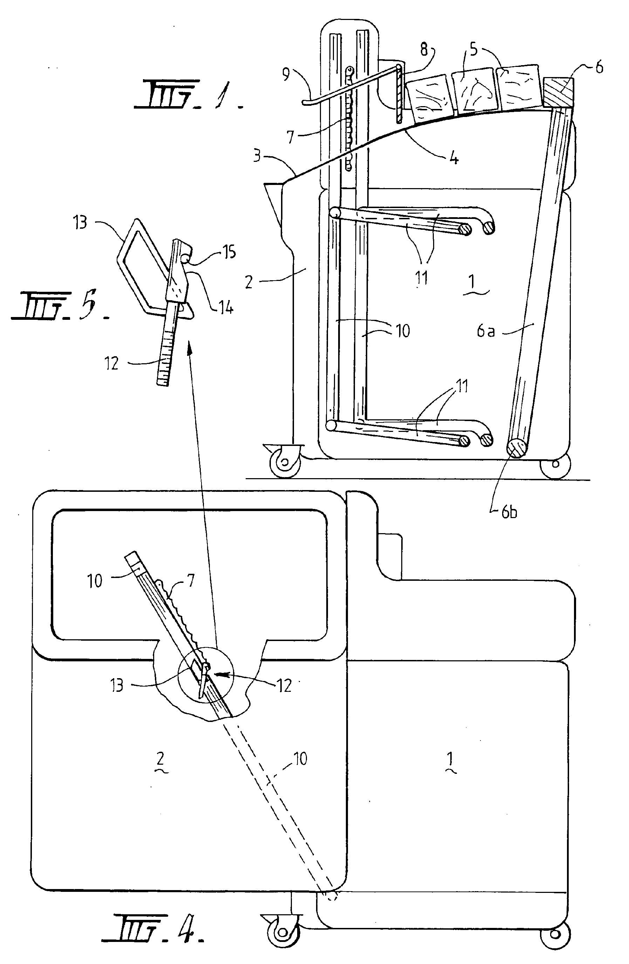

In the embodiment of Figure 1, the bread slicer according to the invention is shown comprising an enclosure 1 having a door 2 which opens to permit surface access and cleaning of the machine. A front angled table 3 is attached to the door and hinges outwardly with the door.

A rear table 4 is provided having an arcuate top face on which the loaves of bread 5 are placed transversely for slicing. The loaves of bread are aligned one behind the other so that they can proceed in procession to the cutting blades. A biased loaf pusher 6 is provided to advance the loaves of bread 5 down the rear table 4 into reciprocating blades 7. These blades are typically parallel serrated cutting blades mounted within a pair of oppositely reciprocating frames as commonly found in the industry.

Loaf pusher 6 comprises an arm 6a mounted to pivot about a fixed point 6b on the frame of the bread slicer. As mentioned earlier, the rear table has an arcuate top face and preferably the radius of the arc corresponds with the length of the arm of the loaf pusher 6 so that under the action of the loaf pusher, the pusher contacts substantially the same provision on the loaf as it progresses the procession of loaves through the cutting blades 7.

The loaf pusher is preferably spring loaded and biased towards the cutting blades 7. Crustier loaves of bread are generally slower to slice principally because of the higher cutting resistance of the crust. Hence if power feed loaf pushers are used to feed the loaves through at a constant rate, there is a tendency for the loaves to be crushed if they are not being cut at the same rate as the pusher is progressing the loaves across the table. However a spring loaded pusher provides a constant progressing force on the loaves rather than being speed dependent and so by spring loading the loaf pusher, the crustier loaves can be sliced at a slower rate without the crushing effect that a power feeder pusher causes.

The curved surface of the rear table further has the advantage of providing a sufficiently horizontal surface on which to load the bread yet allows the loaves to be sliced diagonally in cross section as they pass through the typically vertical reciprocating blades 7.

In accordance with the invention, a gate 8 is provided to restrict access to the cutting blades from the rear table. The gate 8 is controlled to be closed when the pusher is in the retracted position shown in Figure 1. It is preferable that the loaf pusher is automatically retracted after the last loaf has been progressed through the cutting blades 7. The control of the gate is achieved by a mechanical connection between the gate and the mechanised loaf pusher 6 to mechanically close the gate 8 into the closed vertical position when the loaf pusher 6 is automatically retracted. By locking or closing the gate when the loaf pusher 6 is retracted, unobstructed access to the rear table is provided without the possibility of contacting the blades thereby enabling safe and efficient loading of the machine irrespective of whether the blades are moving or stationary.

Alternatively the gate may be electrically controlled to be closed when the loaf pusher is automatically retracted.

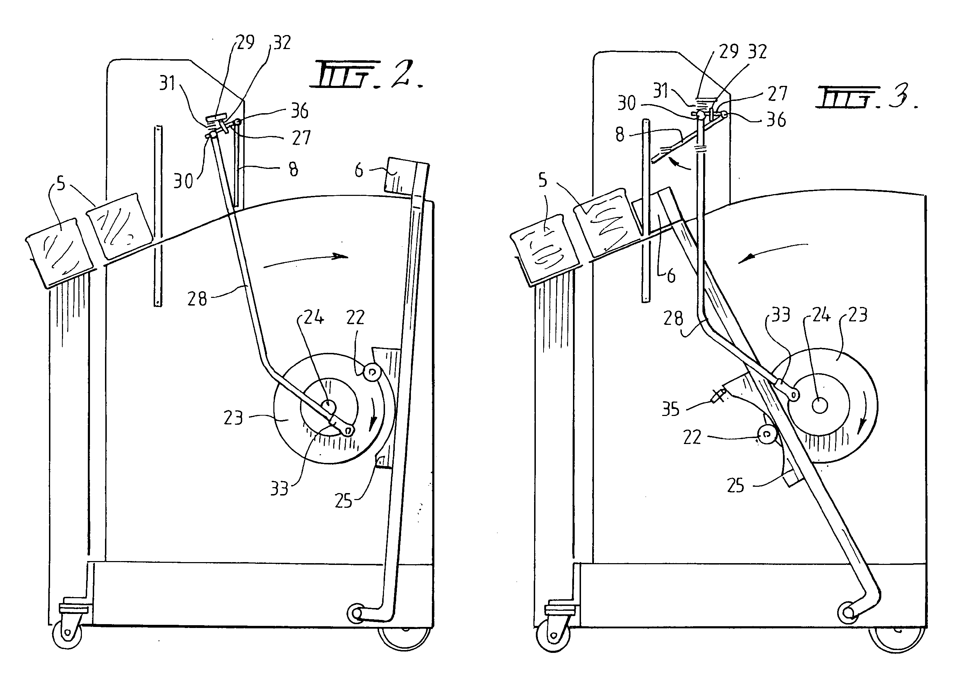

A more detailed view of the interaction between the gate and the pusher is shown in Figure 2 which shows the loaf pusher 6 in the retracted position. The pusher 6 is moved back to the retracted position, by the drive roller 22 on a driven crank 23 on a lay shaft 24. The lay shaft is driven by a V belt and pulley (not shown), that is intended to slip the belt on the pulleys in the event of a jam up of the pusher as it retracts. The pusher is not driven in, but permitted to move in with only pressure provided by a spring or other resilient means (not shown) against it, so that the slicing of the loaves occurs without crushing the loaves. There is a delay cam 25 positioned onto the pusher, which permits the drive roller 22 to rotate a set distance without the pusher moving inwards. This allows the gate 8 to be mechanically released, before the loaf pusher starts to move the bread against it. The gate 8 is hinged at its rearward edge 36, and rides upwards on the loaves as they pass under it. To mechanically close the barrier as the pusher retracts, an arm 27, is connected to the barriers hinge shaft 36. A draw bar 28 slides through a bearing member 30 on the end of this arm 27, so as to allow the free movement of the barrier when bread is being sliced, as loaf height varies. When the pusher retracts, a stop 29 on the end of the drawbar 28, acts on the bearing member 30 to close the gate. Should the gate encounter a problem in closing, such as a hand or foreign object, the spring 31 is compressed until the proximity switch 32 is activated, causing all movement to stop, and the computer will warn of the fault, and refuse to restart until the barrier is free to close. The barrier is held in the closed position by the drawbar 28 that is connected to the lay shaft 24 by rod end bearing 33.

Hence during the operation of the bread slicer, the safety gate 8 is locked when the loaf pusher 6 is in the retracted position. This closing of the gate prevents operators fingers coming into contact with moving or stationary cutting blades after the last loaf is sliced. Fresh loaves are subsequently loaded onto the rear table and the pusher activated. As the loaf pusher 6 moves from its retracted position, safety gate 8 unlocks and is permitted to raise against a top comb 9 as the loaves are pushed into the blades by the loaf pusher.

The top comb 9 is biased towards the rear table to create a down force on the loaf as it is being sliced. This down force prevents the loaf from bouncing making it easier for the blades to cut the bread.

Figure 3 shows the position of the pusher and drive roller when the pusher is fully unretracted or at the end of its feed mode. A description of a typical slicing operation is as follows: The operator loads the loaves onto the rear table of the slicer, and presses two start buttons (not shown) simultaneously, the blades oscillate, and the pusher drive roller moves to position 22, slowly permitting the pusher to contact the loaf. The loaf is pushed under the loaf barrier, and the pusher continues its movement forward until it encounters a limit switch 35. At this point the loaf has cleared the blades and the blade oscillation ceases, and the pusher drive roller rotates , moving the pusher to the rear, retracted position, and closes the barrier at the same time. Proximity switches (not shown), stop the pusher drive roller at the retracted, and fully in position, the motors are operated from the computer (not shown), in each instance.

As mentioned above serrated cutting blades are fitted to a pair of parallel opposed reciprocating frames. Each of the frames is secured within the enclosure 1 by top and bottom connecting treadle arms 11. As shown in Figure 4, when the front door 2 is opened, the frames can be hinged out by simply unbolting the blade frames 10 from the top connecting treadle arms. When the frames are hinged out on the bottom connecting treadle arms 11, blade tension 12 can be easily accessed to permit blades to be changed when they become blunt. In this way the blades can be easily accessed without the need to remove the top comb 9 which would otherwise be necessary to permit blade removal.

The blade frames 10 are preferably provided with a blade retainer cross member 13 which is manufactured from light but strong aluminium or the like metal. The cross member 13 is of tubular construction and is shown as having a trapezoidal cross section to easily fit within the frame 10. The cross member 13 is provided with a plurality of regularly spaced milled slots to receive a blade tensioner 12 for each respective blade. The blade tensioners 12 are provided with hooks 14 to engage with post 15 provided on the respective blades (Figure 5). A thumb screw tensioner is provided to retract the hook 10 relative to the cross member to increase the tension in the blade.

Hence by simply tightening the thumb screw tensioner, the tension in the blade can be adjusted.

## Claims

1. An apparatus for slicing loaves of bread comprising:
a housing;
a reciprocating cutting blade assembly mounted within the housing, an angled table for the movement of loaves towards the reciprocating cutting blade assembly; and
a means for feeding loaves along the angled table to the cutting blade assembly, the housing having an opening for the introduction of loaves on the angled table and a gate for restricting access to the cutting blade assembly through the opening.

2. The bread slicer of claim 1 wherein the operation of the gate is controlled by the position of the loaf feeding means.

3. An apparatus of claim 1 wherein the gate has a locked mode and an unlocked mode, the locking and unlocking of the gate being controlled by a locking mechanism interacting with the loaf feeding means.

4. The apparatus of claim 3, wherein the gate is in the locked mode when the feeding means is in a retracted position.

5. The apparatus of claim 3, wherein the gate is in the unlocked mode when the feeding means is operating to feed the loaves to the reciprocating cutting blade assembly.

6. The apparatus of claim 4, wherein the feedings means is returned to the retracted position after the feeding of loaves is completed.

7. A bread slicer of claim 1, wherein the feeding means is a pusher pivotally mounted to the apparatus.

8. A bread slicer of claim 7, wherein the feeding means provides a constant pushing force.

9. A bread slicer of claim 7, wherein the pusher is spring mounted.

10. A bread slicer of claims 7, 8 or 9, wherein the table is arcuate with a radius of arc corresponding to the pivot point of the pusher.

11. The apparatus of claim 3 wherein the locking mechanism comprises:
a draw bar accentrically mounted to a drive wheel, the drive wheel being adapted to move the feeding means to a retracted position;
the draw bar locking the gate when the feeding means is in the retracted position.

12. The apparatus of claim 11 wherein rotation of the drive wheel releases the gate through the action of the draw bar.

13. The apparatus of claim 12 wherein the drive wheel is provided with a drive roller, the drive roller cooperating with a cam or the feeding means to allow the drive wheel to rotate a predetermined distance after release of the gate to delay release of the feeding means.

14. A method for slicing loaves of bread using a bread slicer of claim 3, comprising:
loading at least one loaf of bread on the angled back table;
activating the feeding means from the retracted position, whereby unlocking the safety gate;
activating the reciprocating cutting blade assembly; and
after at least a portion of the bread is sliced, retracting the feeding means, whereby the safety gate is returned to the locked mode.

15. An apparatus for slicing loaves of bread comprising:
a housing;
a cutting blade assembly within a blade frame, a blade tensioning means or the cutting blade assembly mounted to the housing and disengageable at one end to pivot said frame to allow access to the blade tensioning means.

16. A bread slicer of claim 15 which further comprises a blade retainer cross member adapted to receive the blade tensioning means

17. A bread slicer of claim 16, wherein the blade tensioning means is a thumb screw tensioner.

18. A method for adjusting the tension of the blade in the bread slicer of claim 15 which comprises:
disengaging the blade frame from a top treadle arm on the housing;
pivotally lowering the blade frame;
accessing the blade tensioning means to adjust the blade tension; and
re-engaging the blade frame to the treadle arm.

19. A method of claim 18 wherein the blade tension is adjusted such that the blade may be removed from the blade frame.
